# EUROPEAN PATENT SPECIFICATION

(11) **EP 1 738 282 B1**
(45) Date of publication and mention of the grant of the patent: **18.12.2019**
(21) Application number: 05738665.8
(22) Date of filing: 13.04.2005
(51) Int. Cl.: H04L 29/12, G06F 9/54

(54) **MAINTAINING DATA INTEGRITY IN A DISTRIBUTED ENVIRONMENT**
AUFRECHTERHALTEN DER DATENINTEGRITÄT IN EINER VERTEILTEN UMGEBUNG
MAINTIEN DE L'INTEGRITE DES DONNEES DANS UN ENVIRONNEMENT REPARTI

(30) Priority: 16.04.2004 US 562739 P; 10.06.2004 US 866307
(43) Date of publication of application: 03.01.2007
(73) Proprietor: Infoblox Inc., Sunnyvale, CA 94085 (US)
(72) Inventor: BAILEY, Stuart, M., Mountain View, CA 94043 (US); PULLEYN, Ivan, W., Sunnyvale, CA 94085 (US)
(74) Representative: Gill, David Alan
(86) International application number: PCT/US2005/012698
(87) International publication number: WO 2005/106701

(56) References cited:
- WO-A-00/26807
- US-A1- 2002 147 774
- US-A1- 2002 147 774
- US-B1- 6 411 966
- CHUL-JIN PARK ET AL: "The improvement for integrity between DHCP and DNS" PROCEEDINGS. HIGH PERFORMANCE COMPUTING ON THE INFORMATION SUPERHIGHWAY, 28 April 1997 (1997-04-28), pages 511-516, XP002110636

## Description

### FIELD OF THE INVENTION

The present invention relates generally to computer networks. More specifically, maintaining data integrity within a data store is disclosed.

### BACKGROUND OF THE INVENTION

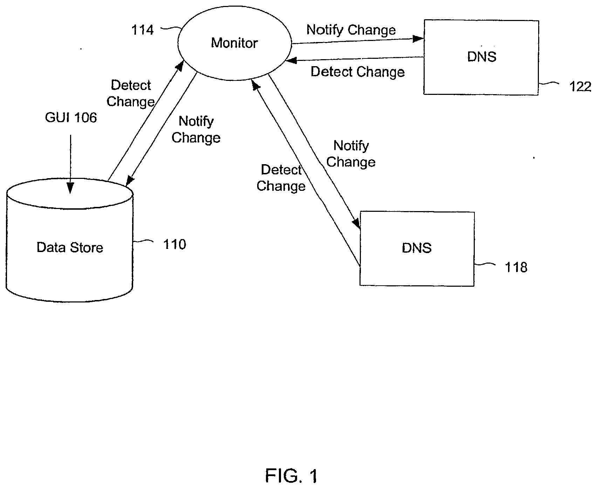

Computer networks today interact with an increasing variety of network applications, such as DNS servers, GUI management programs, server monitors, and process monitors. Many network applications may operate on or use common data, but that data may be stored in separate data stores. A data store, as used herein, refers to any memory associated with a computer that may be used for storing data, including manual files, machine readable files, and databases. Typically, a monitoring program is required to detect changes that occur in one data store and propagate changes to other applications appropriately. Figure 1 is a block diagram illustrating an example of a monitoring system used to maintain data integrity among various network applications. The system is shown to include GUI 106 interacting with data store 110, monitor 114, and separate DNS servers 122 and 118. A user interfaces with GUI 106 to access or modify data store 110. Monitor 114 detects any changes to data store 110, and notifies DNS servers 118 and 122 of any detected changes. This system requires a separate data store for each network application, and a separate monitoring program to detect and communicate changes.

### MAIN REQUEST

WO 00/26807 discloses managing IP addressing in a network to synchronize communications between a central database and one or more servers. Conventional databases are used to store configuration information, including DNS parameters and DHCP parameters interfaced with a server manager. It would be useful to have a simpler system for maintaining data integrity among network applications.

The invention is defined in the claims.

### BRIEF DESCRIPTION OF THE DRAWINGS

Various embodiments of the invention are disclosed in the following detailed description and the accompanying drawings.
Figure 1 is a block diagram illustrating an example of a monitoring system used to maintain data integrity among various network applications.
Figure 2A is a block diagram illustrating a logical view of a backing store interacting with various network applications.
Figure 2B is a block diagram illustrating a physical view of a backing store interacting with various network devices.
Figure 2C is a block diagram illustrating a network device including a backing store.
Figure 3 is a conceptual diagram illustrating various interfaces that may be used to communicate with backing store 304.
Figure 4 is a conceptual diagram illustrating interactions between various processes and a backing store.
Figures 5A-5B are block diagrams illustrating interactions between a backing store and two network applications.
Figure 6 is a flowchart illustrating an interaction between an application and a backing store.
Figure 7A is a flowchart illustrating a request to access a record within a backing store.
Figure 7B is a flowchart illustrating a DNS server requesting A records
Figure 7C is a flowchart illustrating a GUI requesting A records.
Figure 8A is a flowchart illustrating a request to modify or delete a record within a backing store.
Figure 8B is a flowchart illustrating a DNS server requesting the deletion of an A record.
Figure 8C is a flowchart illustrating a GUI requesting a Zone name change.
Figure 9A is a block diagram illustrating a backing store for performing authenticated dynamic DNS.
Figure 9B is a flowchart illustrating a method of performing authenticated dynamic DNS.

### DETAILED DESCRIPTION

The invention can be implemented in numerous ways, including as a process, an apparatus, a system, a composition of matter, a computer readable medium such as a computer readable storage medium or a computer network wherein program instructions are sent over optical or electronic communication links. In this specification, these implementations, or any other form that the invention may take, may be referred to as techniques. In general, the order of the steps of disclosed processes may be altered within the scope of the invention.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and invention may be practiced according to the claims without some or all of these specific details. For the purpose of clarity, technical material that is known in the technical fields related to the invention has not been described in detail so that the invention is not unnecessarily obscured.

A backing store may be used to facilitate maintaining data integrity among a plurality of network applications. In some embodiments, the backing store is a common memory that is accessible to each network application. A network application sends a request to the backing store and the request is interpreted and executed according to the request. By maintaining a common backing store, memory and data integrity can be more efficiently managed.

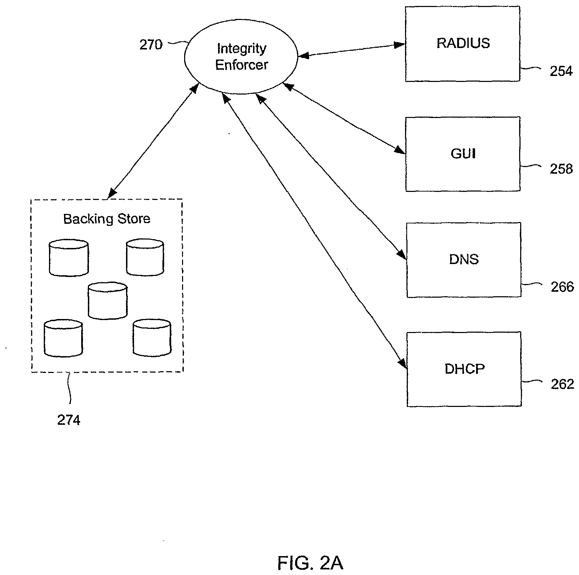

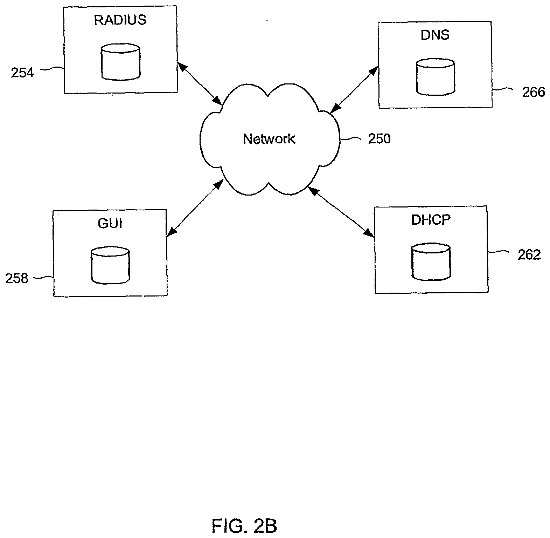

Figure 2A is a block diagram illustrating a logical view of a backing store interacting with various network applications. Backing store 274 is common to RADIUS server 254, GUI device 258, DNS server 266, and DHCP server 262. Integrity enforcer 270 operates between each network device and backing store 274 to enforce data integrity and consistency within backing store 274, as further described below. In some embodiments, the backing store is physically distributed among more than one device. Figure 2B is a block diagram illustrating a physical view of a backing store interacting with various network devices. The backing store is common to RADIUS server 254, GUI device 258, DNS server 266, and DHCP server 262. In this example, RADIUS server 254, GUI device 258, DNS server 266, and DHCP server 262 each store a portion of the backing store, but the backing store may be distributed in other ways. Similarly, the integrity enforcer is distributed as appropriate among the network devices.

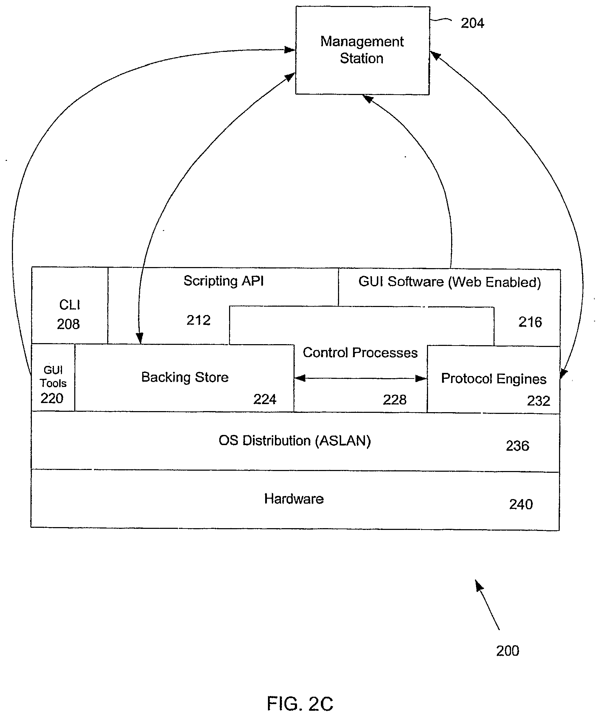

Figure 2C is a block diagram illustrating a network device including a backing store. Network device 200 is shown to include a command line interface (CLI) 208, scripting application program interface (API) 212, graphical user interface (GUI) software 216, GUI tools 220, backing store 224, control processes 228, protocol engines 232, OS distribution 236, and hardware 240. Backing store 224 is physically distributed among one or more devices. The state of backing store 224 may be manipulated using GUI tools 220, CLI 208, scripting API 212, GUI software 216, protocol engines 232, or other appropriate applications (not shown). Protocol engines 232 interact with backing store 228 through a translation mechanism provided by control processes 228. In some embodiments, OS distribution 236 is a proprietary Linux-based software package.

A management station 204 may interact with hardware device 200 to manipulate backing store 224. For example, GUI software 216 and GUI tools 220 may be downloaded to management station 204 to allow for an interactive session with the backing store. Management station 204 may also open a connection with one of protocol engines 232, which may include for example, DNS, SNMP, RADIUS, or HTTP engines.

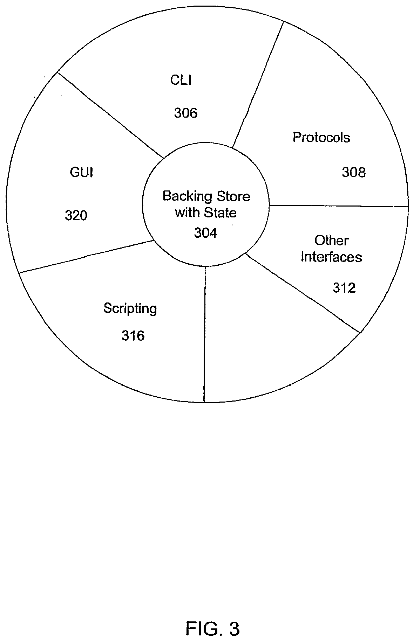

The state of backing store 224 may be changed through any appropriate application. Figure 3 is a conceptual diagram illustrating various interfaces that may be used to communicate with backing store 304. Examples of interface applications include CLI 306, protocols 308, GUI 320, and scripting tools 316. Any other appropriate applications 312 may also be used. Examples of protocols 308 include DHCP, SNMP, DNS, and LDAP. These applications are shown to surround backing store 304 since they act as interfaces to backing store 304. Each application may have a different view of backing store 304. The applications do not need to be aware of the fact that they are all accessing or modifying the same backing store 304. For example, backing store 304 may appear to each application as the data store normally associated with the application. In some embodiments, backing store 304 includes automatically created adapters to interface with different applications.

The state of the system can be defined by backing store 304. Thus the entire system can be replicated based on the state of backing store 304. In some embodiments, backing store 304 is an orthogonally persistent distributed partially ordered (OPDP) data store that supports accessing data with both relational and hierarchical requirements. A data description language, such as a version of Extensible Markup Language (XML), may be used to define data structures and data integrity rules within backing store 304. Data integrity rules may include, for example, rules for interoperation among the data structures and precedence rules. In some embodiments, an XML-based data description language is used to configure rules for integrity checking, monitoring, and data consistency. For example, a DNS server includes records of IP addresses and symbolic names, and an LDAP server includes records of MAC addresses, IP addresses, and symbolic names. If a DNS server record with a particular IP address is deleted, a data integrity rule specifies what happens to the LDAP server record with that IP address.

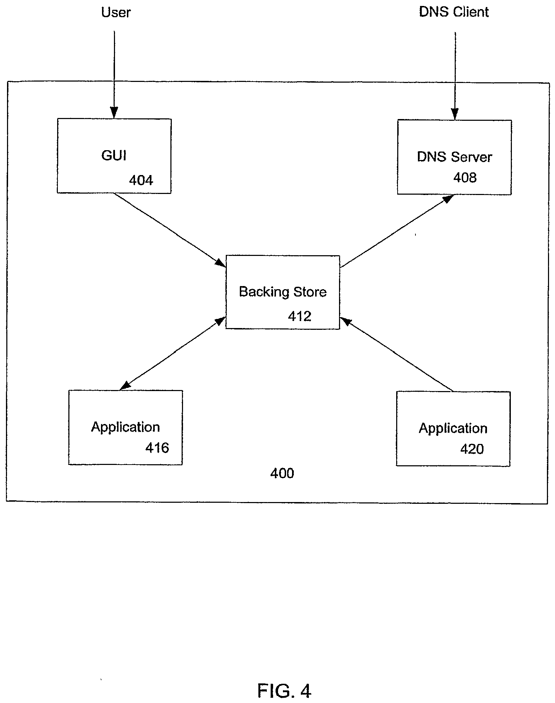

Figure 4 is a conceptual diagram illustrating interactions between various processes and a backing store. In this example, device 400 is shown to include backing store 412 interacting with various processes, including GUI 404, DNS server 408, and other processes 416 and 420. A user interacts with GUI 404 and a DNS client is connected to DNS server 408. The user may insert data into backing store 412 through GUI 404. After the data is inserted, it is immediately visible to DNS server 408. The DNS client may request the inserted data. If the DNS client attempts to delete a portion of that data, that request may be denied depending on the rules specified by the data description language.

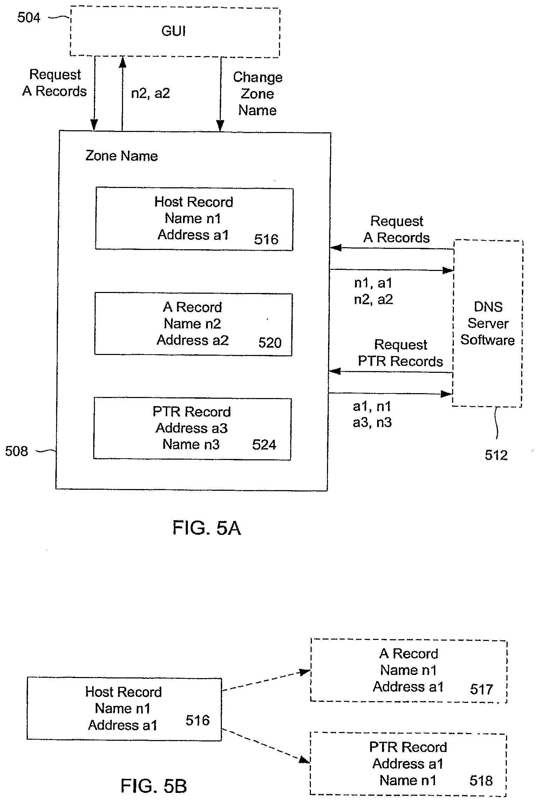

Figures 5A-5B are block diagrams illustrating interactions between a backing store and two network applications. The two network applications illustrated in this example are GUI 504 and DNS server software 512. In some embodiments, DNS server software 512 is Berkeley Internet Name Domain (BIND). In some embodiments, backing store 508 is logically central, but physically distributed. In this example, backing store 508 is shown to include a Host record 516, an A record 520, and a PTR record 524. As shown, Host record 516 includes a Name and an Address. A record 520 includes a Name mapping to an Address. PTR record 524 includes an Address mapping to a Name. A Name may be a host name, such as "www.companyname.com" or "mail.companyname.com". An Address may be an IP address, such as "10.0.1.5". Host record 516, A record 520, and PTR record 524 may be associated with a Zone name. A Zone name may be a domain name, such as "companyname.com" .

GUI 504 can view the three record types shown, whereas DNS server software 512 can only view A records and PTR records. For example, a user can request to view Host records, A records, or PTR records via GUI 504. In contrast, DNS server software 512 can request to view A records or PTR records. For example, when a mapping from a name to an address is needed, DNS server software 512 may request an A record to perform that mapping. There is no need for DNS server software 512 to view Host records, as the DNS server is not concerned with maintaining data integrity.

Figure 5B is a conceptual diagram illustrating how a host record inherently includes an A record and a PTR record. In this example, Host record 516 is shown to map to A record 517 and PTR record 518. This mapping may be performed according to a translation rule provided by a data description language. Accordingly, DNS server software 512 also can view A records and PTR records within Host records. The data description language can define various records that may map to other records. As used herein, a parent record includes a record that maps to another record, or child record.

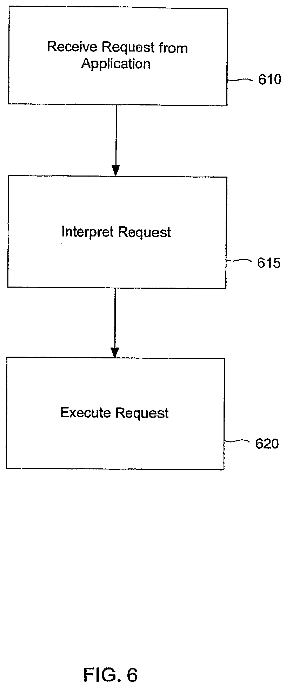

As shown, an application can request or modify records within backing store 508. Various examples of these interactions are described in conjunction with Figures 6-8C. Figure 6 is a flowchart illustrating an interaction between an application and a backing store. In this example, a request from an application, such as GUI 504 or DNS server software 512, is received (610). For example, the request may be a request to access, modify, or delete data in a backing store, such as backing store 508. The request is then interpreted (615). The request may be interpreted based on a data description language, such as an XML-based description language. For example, the request may be interpreted according to rules of the language and the application that sent the request. The request is executed (620). Executing may include accessing, modifying, or deleting data in the backing store.

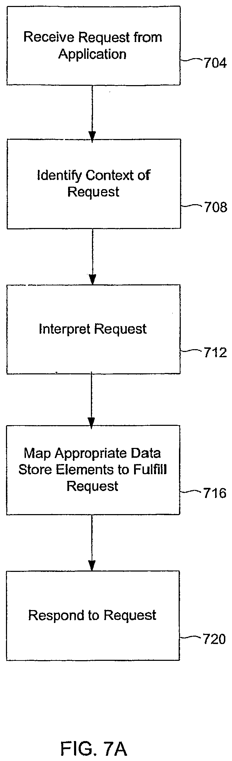

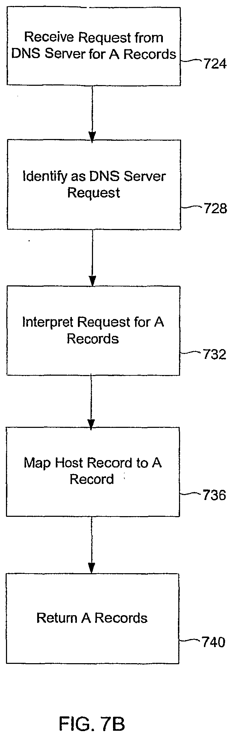

Figure 7A is a flowchart illustrating a request to access a record within a backing store. Figures 7B-7C are flowcharts illustrating specific examples of such requests. As shown in Figure 7A, a request is received from an application (704). The context of the request is identified (708). For example, the application that sent the request is identified. The request is interpreted (712). For example, it is determined what types of data store elements are visible to the application that sent the request. Appropriate data store elements are mapped to fulfill the request (716). This mapping may be performed according to a translation rule provided by a data description language. Examples of data store elements include Host records, A records, and PTR records. A response to the request is sent (720). Specific examples are shown in Figures 7B-7C.

Figure 7B is a flowchart illustrating a DNS server requesting A records. For example, DNS server software 512 may request A records from backing store 508, as shown in Figure 5. Initially, a request for A records is received from a DNS server (724). The request is identified as a DNS server request (728) and the request is interpreted (732). Because the DNS server can view A records and not Host records, Host records are mapped to A records (736). All A records are then returned (740). For example, as shown in Figure 5, A record 517 (n1, a1) and A record 520 (n2, a2) are returned in response to the request for A records from DNS server software 512. Analogously, when DNS server software 512 requests PTR records, PTR record 518 (a1, n1) and PTR record 524 (a3, n3) are returned, as shown in Figure 5.

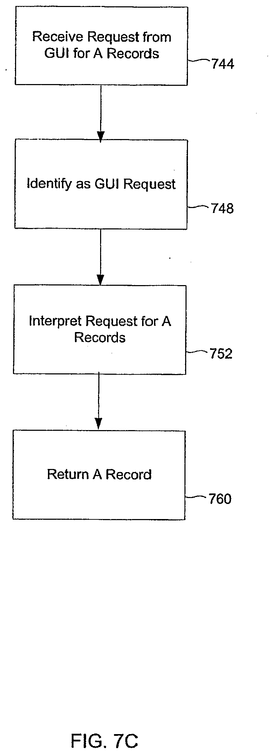

Figure 7C is a flowchart illustrating a GUI requesting A records. For example, GUI 504 may request A records from backing store 508, as shown in Figure 5. Initially, a request for A records is received from a GUI (744). The request is identified as a GUI request (748) and the request is interpreted (752). The GUI can view both A records and Host records. As such, there is no need to map Host records to A records. All A records are then returned (760). For example, as shown in Figure 5, A record 520 (n2, a2) is returned in response to the request for A records from GUI 504. Analogously, when GUI 504 requests PTR records, PTR record 524 (a3, n3) is returned.

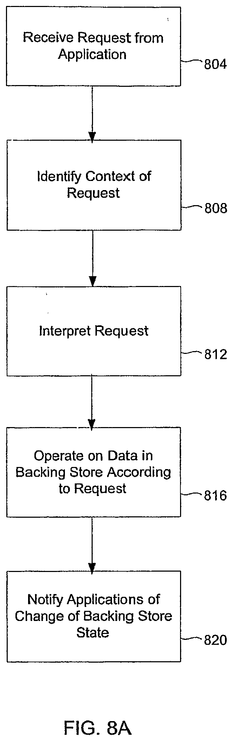

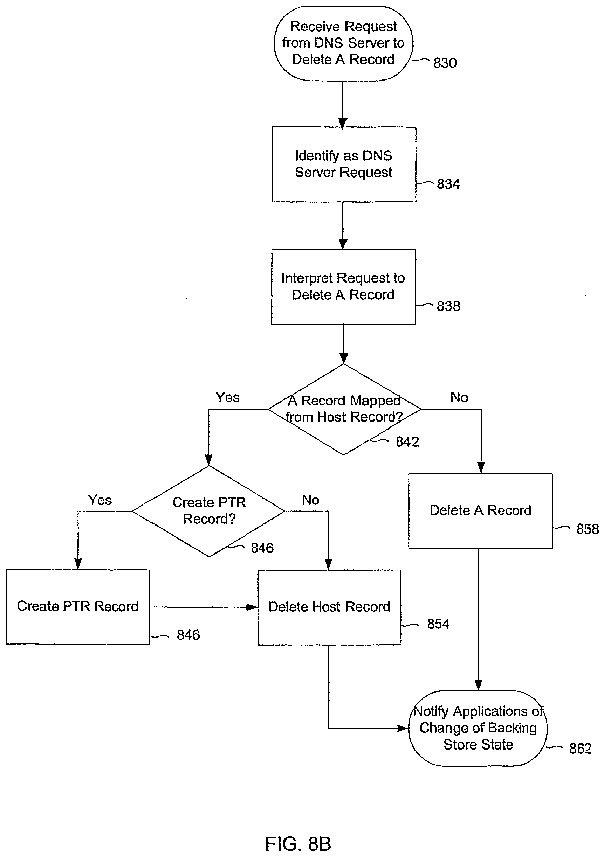

Figure 8A is a flowchart illustrating a request to modify or delete a record within a backing store. Figures 8B-8C are flowcharts illustrating specific examples of such requests. As shown in Figure 8A, a request is received from an application (804). The context of the request is identified (808). For example, the application that sent the request is identified. The request is interpreted (812). For example, it is determined what types of data store elements are visible to the application that sent the request. The data in the backing store is operated on according to the request (816). For example, a record may be modified or deleted. Applications are notified of any change in backing store state as appropriate (862). Specific examples are shown in Figure 8B-8C.

Figure 8B is a flowchart illustrating a DNS server requesting the deletion of an A record. For example, DNS server software 512 may request the deletion of A record 517 or A record 520 from backing store 508 in Figure 5. Initially, a request to delete an A record is received from a DNS server (830). The request is identified as a DNS server request (834) and the request is interpreted (838). Because the DNS server can view A records and not Host records, Host records need to be mapped to A records in order for those A records to be visible to the DNS server. It is determined whether the A record to be deleted is one that is mapped from a Host record (842). If the A record to be deleted is not one that is mapped from a Host record, such as A record 520, the A record is deleted (858). Applications are notified of the change in backing store state as appropriate (862). If the A record to be deleted is one that is mapped from a Host record, such as A record 517, it is determined whether a PTR record associated with the Host record should be created (846). Because the A record is mapped from a Host record, in order to delete the A record, the Host record would need to be deleted. Deleting the Host record would also cause the PTR record associated with the Host record to be deleted. Accordingly, it may be desirable to create a separate PTR record (846) before deleting the Host record (854). In some embodiments, the determination (846) is based on rules within a data description language. In some embodiments, a user is prompted and the determination (846) is based on the user's response. In some embodiments, a rule is provided a priori and the determination (846) is based on the rule. After the Host record is deleted, applications are notified of the change in backing store state as appropriate (862).

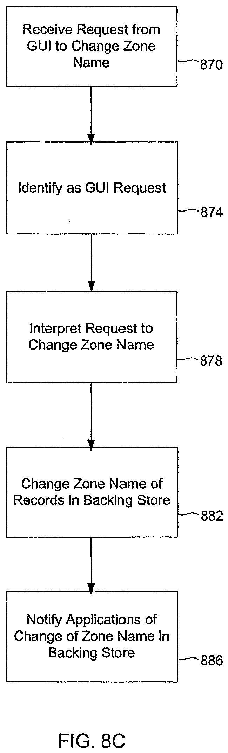

Figure 8C is a flowchart illustrating a GUI requesting a Zone name change. For example, GUI 504 may request the Zone name associated with Host record 516, A record 520, and PTR record 524 to be changed, as shown in Figure 5. Initially, a request to change a Zone name is received from a GUI (870). The request is identified as a GUI request (874) and the request is interpreted (878). The Zone name of records in the backing store is changed appropriately (882). For example, in Figure 5, assuming n1 is "mail.companyname.com" and n2 is "ftp.companyname.com", when GUI 504 requests to change the Zone name to "newname.com", n1 becomes "mail.newname.com" and n2 becomes "ftp.newname.com". Each record is updated to reflect the change. Applications are notified appropriately of the change of Zone name in the backing store (886).

Similarly, the examples above can apply to RADIUS, Lightweight Directory Access Protocol (LDAP), Kerberos, Public Key Infrastructure (PKI), or any other appropriate network applications. For example, in a RADIUS application, realm and user structures can replace the zone and host structures in the above examples. In an LDAP application, directory and policy structures can replace the zone and host structures. A mixed application, such as authenticated dynamic DNS, may interact with the backing store. Authenticated dynamic DNS mixes RADIUS, DHCP, and DNS.

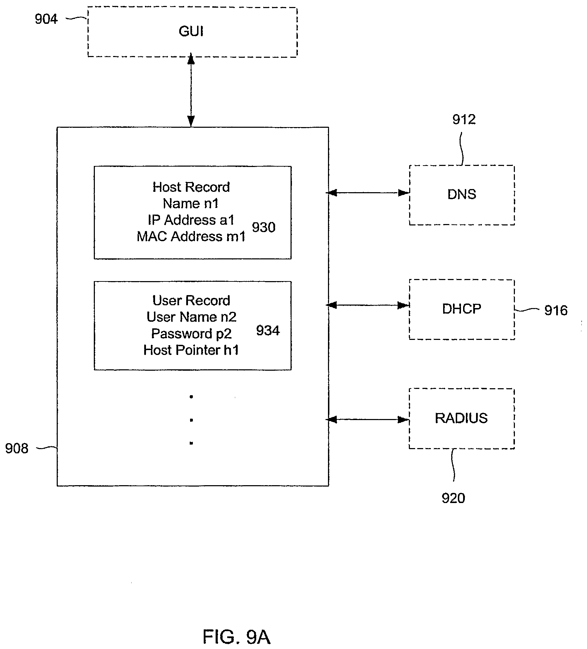

Figure 9A is a block diagram illustrating a backing store for performing authenticated dynamic DNS. In some embodiments, backing store 508 is logically central, but physically distributed. In this example, backing store 508 is shown to include a Host record 930 and a User record 934. As shown, Host record 930 includes a Name, an IP Address, and a MAC Address. User record 934 includes a Username, Password, and Host Record Pointer. A Name may be a host name, such as "www.companyname.com" or "mail.companyname.com".

GUI 904 can view all record types. Each network application has a filtered view of the data store. RADIUS application 920 can view User record 934. DNS application 912 can view an A record and a PTR record, which map from Host record 930, as described above. DHCP application 916 can view a Lease record, which includes an IP Address and a MAC Address. A Lease record is mapped from a Host record similar to how an A record is mapped from a Host record.

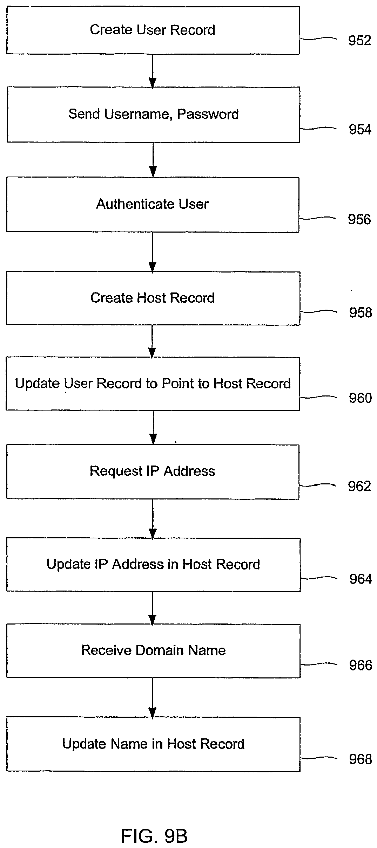

Figure 9B is a flowchart illustrating a method of performing authenticated dynamic DNS. For example, this method may be performed by the system shown in Figure 9A. First, a User record is created (952). For example, an administrator may provision a new user into a system. The User record includes a username and password. Once the User record is provisioned, the user may login from a device such as a laptop. A username and password are sent (954) from the laptop to a RADIUS application. The user is authenticated (954) by the RADIUS application. A Host record is created (958). The Host record includes a Name, IP Address, and MAC Address. The MAC Address is the MAC address of the user device. For example, the MAC address of the user device may be sent by the user during login. The Name and IP Address of the Host record are empty at this point. Now that the Host record is created, the User record is updated to include a pointer to the Host record (960). For example, the Host Pointer in User record 934 may point to Host record 930. An IP Address is requested (962). For example, the user device may request an IP address from the DHCP application. An IP Address is leased to the device and the Host record is updated with the IP Address (964). Similarly, a domain name is provided (966) by the DNS application. The Host record is updated with the domain name (968). The Host record fields are now populated and can be viewed by a GUI application. The DHCP application cannot view the Host record, but can view the Lease record (MAC Address and IP Address) mapped from the Host record. Similarly, the RADIUS and DNS applications each have filtered views of the Host record.

When deleting a record, other records may be affected. For example, a request to delete a Realm record may be received. A Realm record includes User records. It may be that the User records and associated Host records should be deleted, but not other records that are associated with the Realm, such as Zone records and Network records. Such rules can be preconfigured in the system.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A method of executing a request (610) from one of a plurality of network applications, including:
(i) storing, using an integrity enforcer, a set of data records for the plurality of network applications (504, 512) in a backing store (274) having the set of data records accessible by a plurality of network applications through different protocols, wherein the backing store (274) is a common memory that is accessible to a first network application using a first protocol and a second network application using a second protocol, the plurality of network applications including a Domain Name System (DNS) server, and wherein the plurality of network applications interact with the backing store (274) through the integrity enforcer;
(ii) receiving, using the integrity enforcer, a request (704) from one network application;
(iii) identifying, using the integrity enforcer, a context of the request (708), wherein the identifying of the context includes identifying the one network application that sent the request;
(iv) interpreting, using the integrity enforcer, the request (712); and
(v) executing, using the integrity enforcer, the request, wherein executing the request includes accessing a data record in the backing store (274), modifying the data record in the backing store (274), or deleting the data record in the backing store, wherein in response to a determination that the execution of the request includes the deleting of the data record in the backing store:
in response to a determination that the request is interpreted as a DNS server request and the DNS server request is a request to delete an A record:
determining whether the A record to be deleted is mapped from a Host record;
in response to a determination that the A record to be deleted is mapped from the Host record:
creating a PTR record relating to the A record;
deleting the Host record after the creating of the PTR record; and
notifying a network application of the deletion of the Host record and the creation of the PTR record; and
in response to a determination that the A record to be deleted is not mapped from the Host record:
deleting the A record; and
notifying the network application of the deletion of the A record.

2. The method of claim 1, wherein executing includes notifying an application of a change of backing store state.

3. The method of claim 1, wherein executing includes modifying data in the backing store (274).

4. The method of claim 1, wherein executing includes deleting data in the backing store (274).

5. The method of claim 1, wherein interpreting includes mapping appropriate backing store elements to fulfill the request.

6. The method of claim 1, wherein executing includes creating a record when a record is deleted.

7. The method of claim 1, wherein the first network application is a protocol engine (232).

8. The method of claim 1, wherein the first network application is a DNS server (266).

9. The method of claim 1, wherein the first network application is a RADIUS server (254).

10. The method of claim 1, wherein the first network application is an HTTP server.

11. The method of claim 1, wherein the first network application is a GUI (258).

12. The method of claim 1, wherein the first network application is a command line interface.

13. The method of claim 1, wherein the request is to access a record.

14. The method of claim 1, wherein the request is to access a parent record.

15. The method of claim 1, wherein the request is to access a child record.

16. The method of claim 1, wherein the request is to access a Host record.

17. The method of claim 1, wherein the request is to access an A record.

18. The method of claim 1, wherein executing includes creating a child record when a parent record is deleted.

19. The method of claim 1, wherein interpreting includes interpreting a data description language.

20. The method of claim 1, wherein interpreting includes resolving rules of an XML-based data description language.

21. A system for executing a request from one of a plurality of network applications, including:
a processor configured to execute the method of any one of claims 1 to 20.

## Patentansprüche

1. Verfahren zum Ausführen einer Anforderung (610) von einer aus einer Mehrzahl von Netzwerkanwendungen, das Folgendes beinhaltet:
(i) Speichern, mit einem Integritätsdurchsetzer, einer Menge an Datensätzen für die Mehrzahl von Netzwerkanwendungen (504, 512) in einem Sicherungsspeicher (274), in dem die Menge an Datensätzen für eine Mehrzahl von Netzwerkanwendungen über verschiedene Protokolle zugänglich ist, wobei der Sicherungsspeicher (274) ein gemeinsames Memory ist, das für eine erste Netzwerkanwendung über ein erstes Protokoll und eine zweite Netzwerkanwendung über ein zweites Protokoll zugänglich ist, wobei die Mehrzahl von Netzwerkanwendungen einen DNS-(Domain Name System)-Server beinhaltet und wobei die Mehrzahl von Netzwerkanwendungen mit dem Sicherungsspeicher (274) durch den Integritätsdurchsetzer interagiert;
(ii) Empfangen, über den Integritätsdurchsetzer, einer Anforderung (704) von einer Netzwerkanwendung;
(iii) Identifizieren, mit dem Integritätsdurchsetzer, eines Kontexts der Anforderung (708), wobei das Identifizieren des Kontexts das Identifizieren der einen Netzwerkanwendung beinhaltet, die die Anforderung gesendet hat;
(iv) Interpretieren, mit dem Integritätsdurchsetzer, der Anforderung (712); und
(v) Ausführen, mit dem Integritätsdurchsetzer, der Anforderung, wobei das Ausführen der Anforderung das Zugreifen auf einen Datensatz in dem Sicherungsspeicher (274), das Modifizieren des Datensatzes in dem Sicherungsspeicher (274) oder das Löschen des Datensatzes in dem Sicherungsspeicher beinhaltet, wobei als Reaktion auf eine Feststellung, dass die Ausführung der Anforderung das Löschen des Datensatzes in dem Sicherungsspeicher beinhaltet:
als Reaktion auf eine Feststellung, dass die Anforderung als DNS-Server-Anforderung interpretiert wird und die DNS-Server-Anforderung eine Anforderung zum Löschen eines A-Datensatzes ist:
festgestellt wird, ob der zu löschende A-Datensatz von einem Host-Datensatz gemappt ist;
als Reaktion auf eine Feststellung, dass der zu löschende A-Datensatz von dem Host-Datensatz gemappt ist:
ein PTR-Datensatz in Bezug auf den A-Datensatz erzeugt wird;
der Host-Datensatz nach dem Erzeugen des PTR-Datensatzes gelöscht wird; und
eine Netzwerkanwendung über das Löschen des Host-Datensatzes und das Erzeugen des PTR-Datensatzes benachrichtigt wird; und
als Reaktion auf eine Feststellung, dass der zulöschende A-Datensatz nicht vom Host-Datensatz gemappt ist:
der A-Datensatz gelöscht wird; und
die Netzwerkanwendung über das Löschen des A-Datensatzes benachrichtigt wird.

2. Verfahren nach Anspruch 1, wobei das Ausführen das Benachrichtigen einer Anwendung über eine Änderung des Sicherungsspeicherzustands beinhaltet.

3. Verfahren nach Anspruch 1, wobei das Ausführen das Modifizieren von Daten im Sicherungsspeicher (274) beinhaltet.

4. Verfahren nach Anspruch 1, wobei das Ausführen das Löschen von Daten im Sicherungsspeicher (274) beinhaltet.

5. Verfahren nach Anspruch 1, wobei das Interpretieren das Mappen geeigneter Sicherungsspeicherelemente zum Erfüllen der Anforderung beinhaltet.

6. Verfahren nach Anspruch 1, wobei das Ausführen das Erzeugen eines Datensatzes beinhaltet, wenn ein Datensatz gelöscht wird.

7. Verfahren nach Anspruch 1, wobei die erste Netzwerkanwendung eine Protokoll-Engine (232) ist.

8. Verfahren nach Anspruch 1, wobei die erste Netzwerkanwendung ein DNS-Server (266) ist.

9. Verfahren nach Anspruch 1, wobei die erste Netzwerkanwendung ein RADIUS-Server (254) ist.

10. Verfahren nach Anspruch 1, wobei die erste Netzwerkanwendung ein HTTP-Server ist.

11. Verfahren nach Anspruch 1, wobei die erste Netzwerkanwendung eine GUI (258) ist.

12. Verfahren nach Anspruch 1, wobei die erste Netzwerkanwendung eine Befehlszeilenschnittstelle ist.

13. Verfahren nach Anspruch 1, wobei die Anforderung zum Zugreifen auf einen Datensatz ist.

14. Verfahren nach Anspruch 1, wobei die Anforderung zum Zugreifen auf einen übergeordneten Datensatz ist.

15. Verfahren nach Anspruch 1, wobei die Anforderung zum Zugreifen auf einen untergeordneten Datensatz ist.

16. Verfahren nach Anspruch 1, wobei die Anforderung zum Zugreifen auf einen Host-Datensatz ist.

17. Verfahren nach Anspruch 1, wobei die Anforderung zum Zugreifen auf einen A-Datensatz ist.

18. Verfahren nach Anspruch 1, wobei die Ausführung das Erzeugen eines untergeordneten Datensatzes beinhaltet, wenn ein übergeordneter Datensatz gelöscht wird.

19. Verfahren nach Anspruch 1, wobei das Interpretieren das Interpretieren einer Datenbeschreibungssprache beinhaltet.

20. Verfahren nach Anspruch 1, wobei das Interpretieren das Auflösen von Regeln einer XML-basierten Datenbeschreibungssprache beinhaltet.

21. System zum Ausführen einer Anforderung von einer aus einer Mehrzahl von Netzwerkanwendungen, das Folgendes umfasst:
einen Prozessor, konfiguriert zum Ausführen eines Verfahrens nach einem der Ansprüche 1 bis 20.

## Revendications

1. Un procédé d'exécution d'une demande (610) à partir d'une application de réseau d'une pluralité d'applications de réseau, comprenant :
(i) la conservation en mémoire, au moyen d'un exécuteur d'intégrité, d'un ensemble d'enregistrements de données destinés à la pluralité d'applications de réseau (504, 512) dans un espace mémoire de sauvegarde (274) dans lequel l'ensemble d'enregistrements de données est accessible par une pluralité d'applications de réseau par l'intermédiaire de différents protocoles, où l'espace mémoire de sauvegarde (274) est une mémoire commune qui est accessible à une première application de réseau au moyen d'un premier protocole et à une deuxième application de réseau au moyen d'un deuxième protocole, la pluralité d'applications de réseau comprenant un serveur de système de noms de domaine (DNS), et où la pluralité d'applications de réseau interagissent avec l'espace mémoire de sauvegarde (274) par l'intermédiaire de l'exécuteur d'intégrité,
(ii) la réception, au moyen de l'exécuteur d'intégrité, d'une demande (704) à partir d'une application de réseau,
(iii) l'identification, au moyen de l'exécuteur d'intégrité, d'un contexte de la demande (708), où l'identification du contexte comprend l'identification de l'application de réseau qui a envoyé la demande,
(iv) l'interprétation, au moyen de l'exécuteur d'intégrité, de la demande (712), et
(v) l'exécution, au moyen de l'exécuteur d'intégrité, de la demande, où l'exécution de la demande comprend l'accès à un enregistrement de données dans l'espace mémoire de sauvegarde (274), la modification de l'enregistrement de données dans l'espace mémoire de sauvegarde (274) ou la suppression de l'enregistrement de données dans l'espace mémoire de sauvegarde, où en réponse à une détermination que l'exécution de la demande comprend la suppression de l'enregistrement de données dans l'espace mémoire de sauvegarde,
en réponse à une détermination que la demande est interprétée sous la forme d'une demande de serveur DNS et la demande de serveur DNS est une demande de suppression d'un enregistrement A,
la détermination si l'enregistrement A à supprimer est apparié à partir d'un enregistrement hôte,
en réponse à une détermination que l'enregistrement A à supprimer est apparié à partir de l'enregistrement hôte :
la création d'un enregistrement PTR relatif à l'enregistrement A,
la suppression de l'enregistrement hôte après la création de l'enregistrement PTR, et
la notification à une application de réseau de la suppression de l'enregistrement hôte et de la création de l'enregistrement PTR, et en réponse à une détermination que l'enregistrement A à supprimer n'est pas apparié à partir de l'enregistrement hôte :
la suppression de l'enregistrement A, et
la notification à l'application de réseau de la suppression de l'enregistrement A.

2. Le procédé selon la Revendication 1, où l'exécution comprend la notification à une application d'une modification d'un état d'espace mémoire de sauvegarde.

3. Le procédé selon la Revendication 1, où l'exécution comprend la modification de données dans l'espace mémoire de sauvegarde (274).

4. Le procédé selon la Revendication 1, où l'exécution comprend la suppression de données dans l'espace mémoire de sauvegarde (274).

5. Le procédé selon la Revendication 1, où l'interprétation comprend la mise en correspondance d'éléments d'espace mémoire de sauvegarde appropriés de façon à satisfaire la demande.

6. Le procédé selon la Revendication 1, où l'exécution comprend la création d'un enregistrement lorsqu'un enregistrement est supprimé.

7. Le procédé selon la Revendication 1, où la première application de réseau est un moteur de protocole (232).

8. Le procédé selon la Revendication 1, où la première application de réseau est un serveur DNS (266).

9. Le procédé selon la Revendication 1, où la première application de réseau est un serveur RADIUS (254).

10. Le procédé selon la Revendication 1, où la première application de réseau est un serveur HTTP.

11. Le procédé selon la Revendication 1, où la première application de réseau est une GUI (258).

12. Le procédé selon la Revendication 1, où la première application de réseau est une interface de ligne de commande.

13. Le procédé selon la Revendication 1, où la demande vise à accéder à un enregistrement.

14. Le procédé selon la Revendication 1, où la demande vise à accéder à un enregistrement parent.

15. Le procédé selon la Revendication 1, où la demande vise à accéder à un enregistrement enfant.

16. Le procédé selon la Revendication 1, où la demande vise à accéder à un enregistrement hôte.

17. Le procédé selon la Revendication 1, où la demande vise à accéder à un enregistrement A.

18. Le procédé selon la Revendication 1, où l'exécution comprend la création d'un enregistrement enfant lorsqu'un enregistrement parent est supprimé.

19. Le procédé selon la Revendication 1, où l'interprétation comprend l'interprétation d'un langage de description de données.

20. Le procédé selon la Revendication 1, où l'interprétation comprend la résolution de règles d'un langage de description de données de type XML.

21. Un système destiné à l'exécution d'une demande à partir d'une application de réseau d'une pluralité d'applications de réseau, comprenant :
un processeur configuré de façon à exécuter le procédé selon l'une quelconque des Revendications 1 à 20.
